# EUROPÄISCHE PATENTSCHRIFT

(11) **EP 0 844 954 B1**
(45) Veröffentlichungstag und Bekanntmachung des Hinweises auf die Patenterteilung: **13.09.2000**
(21) Anmeldenummer: 96915997.9
(22) Anmeldetag: 12.06.1996
(51) Int. Cl.: B60T 8/00

(54) **VERFAHREN UND VORRICHTUNG ZUR STEUERUNG DER BREMSANLAGE EINES FAHRZEUGS**
METHOD AND DEVICE FOR CONTROLLING A VEHICLE BRAKE SYSTEM
PROCEDE ET DISPOSITIF POUR LA COMMANDE DU SYSTEME DE FREINAGE D'UN VEHICULE

(30) Priorität: 22.08.1995 DE 19530735
(43) Veröffentlichungstag der Anmeldung: 03.06.1998
(73) Patentinhaber: ROBERT BOSCH GMBH, 70442 Stuttgart (DE)
(72) Erfinder: MAISCH, Wolfgang, D-71701 Schwieberdingen (DE)
(86) Internationale Anmeldenummer: DE9601026
(87) Internationale Veröffentlichungsnummer: WO9708028

(56) Entgegenhaltungen:
- WO-A-85/02592
- WO-A-92/05987
- DE-A- 3 923 599
- US-A- 4 673 225

## Beschreibung

### Stand der Technik

Die Erfindung betrifft ein Verfahren und eine Vorrichtung zur Steuerung der Bremsanlage eines Fahrzeugs gemäß den Oberbegriffen der unabhängigen Patentansprüche.

Ein derartiges Verfahren bzw. eine derartige Vorrichtung ist aus der WO-A1 83/03230 bekannt. Die dort beschriebene Bremskraftregelanlage umfaßt eine Regelung des Schlupfes an jedem Rad des Fahrzeugs während eines Bremsvorgangs auf einen vorgegebenen Wert. Ein Regler steuert den Druck in einer pneumatischen oder hydraulischen Bremsanlage an den einzelnen Radbremsen derart, daß der Schlupf an allen Rädern den jeweils vorgegebenen Wert einnimmt. Die Schlupfregelung trägt zur gleichmäßigen Abnutzung von Reifen und Bremsen bei.

Eine entsprechende Wirkung wird durch eine Regelung auf gleichen Bremsenverschleiß an allen Rädern erreicht. In diesem Zusammenhang ist für eine druckgeregelte Bremsanlage aus der DE 33 13 078 C2 bekannt, über Verschleißsensoren der Bremsenverschleiß zu erfassen und den Bremsdruck an denjenigen Radbremsen zu reduzieren oder zurückzuhalten, an denen ein stärkerer Verschleiß auftritt.

Wünschenswert im Zusammenhang mit Bremsanlagensteuerungen ist die Kenntnis der jeweiligen Radaufstandskräfte (Radlasten). Bei Kenntnis der Radaufstandskräfte kann die Steuerung der Bremsanlage, insbesondere Regelfunktionen wie ein Antiblockierschutzregler, ein Fahrdynamikregler, ein Antriebsschlupfregler oder ein Fahrwerksregler, an die aktuelle Fahrzeugbeladung angepaßt werden.

Im oben genannten Stand der Technik sind zur Erfassung der Radaufstandskräfte Sensoren vorgesehen, die einen erheblichen Mehraufwand bedeuten.

Die DE-A1 39 23 599 beschreibt die Bestimmung der Bremskräfte der Räder eines Fahrzeugs aus den gemessenen Größen Radgeschwindigkeit und Bremsdruck. Ferner wird über Schätzverfahren der Reibbeiwert zwischen Reifen und Straße abgeschätzt und aus dem abgeschätzten Reibwert und der ermittelten Bremskraft die Radlast gemäß dem bekannten Zusammenhang zwischen Bremskraft und Radlast ermittelt.

Es ist Aufgabe der Erfindung, bei der Steuerung einer Bremsanlage auch eine Bestimmung der relativen Radaufstandskräfte ohne aufwendige Ermittlung von Reibwerten zu bewerkstelligen.

Dies wird durch die kennzeichnenden Merkmale der unabhängigen Patentansprüche erreicht.

### Vorteile der Erfindung

Es wird eine kostengünstige Ermittlung der Radaufstandskräfte bzw. der relativen Radlasten bereitgestellt. Diese Werte werden bei der Steuerung der Bremsanlage in vorteilhafter Weise verwendet.

Ferner wird in vorteilhafter Weise eine gleichmäßige Verteilung der Bremskräfte auf alle Räder, mit größtmöglicher Abbremsung bei guter Richtungsstabilität und gleichmäßigen Reifen- und Bremsenverschleiß erreicht.

Besonders vorteilhaft ist, daß die ermittelten Daten bei elektromotorisch betätigten Bremsen herangezogen werden, um eventuelle Veränderungen der Bremsen im Laufe des Fahrzeugbetriebs zu erkennen.

Weitere Vorteile ergeben sich aus der nachfolgenden Beschreibung von Ausführungsbeispielen sowie aus den abhängigen Patentansprüchen.

### Zeichnung

Die Erfindung wird nachstehend anhand der in der Zeichnung dargestellten Ausführungsformen näher erläutert. Dabei zeigt Figur 1 ein Blockschaltbild zur Verdeutlichung der erfindungsgemäßen Vorgehensweise, während in Figur 2 die Bremsensteuerung gezeigt ist. Die Figuren 3 und 4 zeigen Flußdiagramme, anhand derer Realisierungen als Rechnerprogramme zur Bestimmung der relativen Radaufstandskräfte sowie zur Erkennung von Veränderungen einer elektromotorischen Bremse skizziert sind.

### Beschreibung von Ausführungsbeispielen

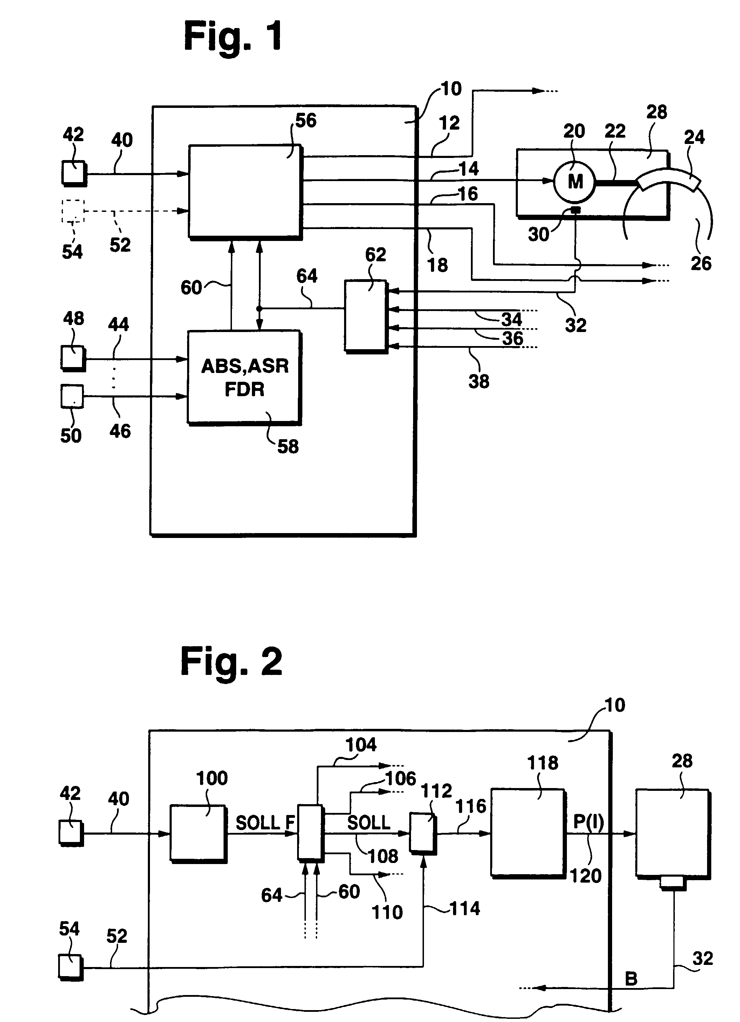

Figur 1 zeigt eine elektronische Steuereinheit 10, welche über Ausgangsleitungen 12, 14, 16 und 18 die Radbremsen eines zweiachsigen Fahrzeugs betätigt. Im bevorzugten Ausführungsbeispiel wird ein elektromotorischer Bremsensteller eingesetzt, der in Figur 1 am Beispiel einer Radbremse skizziert ist.

Die jeweilige Ausgangsleitung führt - über eine nicht dargestellte Endstufe - auf einen Elektromotor 20, der über eine mechanische Verbindung 22 mit den Bremsenzangen 24 des Rades 26 verbunden ist. Ferner ist im Bereich des Bremsenstellers 28 eine Meßeinrichtung 30 zur Erfassung der ausgeübten Bremskraft vorgesehen. Von der Meßeinrichtung 30 führt eine Leitung 32 zur Steuereinheit 10 zurück. Entsprechend werden von den anderen Radbremsen die Leitungen 34, 36 und 38 der Steuereinheit 10 zugeführt. Zur Erfassung der Bremskraft dienen im bevorzugten Ausführungsbeispiel Dehnungsmeßstreifen, welche die vom Elektromotor auf die Bremszangen ausgeübte Kraft erfassen. Alternativ oder ergänzend wird in einem bevorzugten Ausführungsbeispiel der durch den Motor fließende Strom bzw. die an den Motor ausgegebene Schrittzahl zur Ermittlung der Bremskraft herangezogen.

Der Steuereinheit 10 wird ferner eine Eingangsleitung 40 von einer Meßeinrichtung für die Bremspedalbetätigung zugeführt. Ferner werden der Steuereinheit 10 Leitungen 44 bis 46 von Meßeinrichtungen 48 bis 50 zur Erfassung der Radgeschwindigkeiten der Räder zugeführt.

In einem vorteilhaften Ausführungsbeispiel werden der Steuereinheit 10 ferner Eingangsleitungen 52 zugeführt, welche von Meßeinrichtungen 54 ausgehen, die den zur nachfolgend beschriebenen Regelung verwendeten Istwert (Schlupf) an den einzelnen Rädern des Fahrzeugs erfassen.

Die aus wenigstens einem Mikrocomputer bestehende Steuereinheit 10 weist die folgenden Funktionsblöcke (Programmblöcke) auf. Ein erster Funktionsblock 56 dient zur Steuerung der Radbremsen. Ihm werden vorzugsweise die Eingangsleitung 40, gegebenenfalls die Eingangsleitungen 52 sowie in einem vorteilhaften Ausführungsbeispiel die Eingangsleitungen 44 bis 46 zugeführt. Ein zweiter Funktionsblock 58 symobilisiert auf die Bremsanlage eingreifende Funktionen wie Antiblockierschutzregelung (ABS), Antriebsschlupfregelung (ASR), Fahrdynamikregelung (FDR), etc.. Diesem Funktionsblock werden die Eingangsleitungen 44 bis 46 sowie nicht dargestellte, für die Funktionen wesentlichen Eingangsgrößen zugeführt. Über eine Leitung 60 sind die Funktionsblöcke 58 und 56 verbunden.

Die Ausgangsleitungen 12 bis 18 gehen vom Funktionsblock 56 aus. Ein dritter Funktionsblock 62 dient zur Ermittlung der relativen Radaufstandskräfte sowie gegebenenfalls zur Überwachung der einzelnen Radbremsen. Ihm werden die Eingangsleitungen 32 bis 38 zugeführt. Über eine Ausgangsleitung 64 ist der Funktionsblock 62 sowohl mit dem Funktionsblock 56 als auch mit dem Funktionsblock 58 verbunden.

Die Steuerung der Bremsen erfolgt im Rahmen des Funktionsblocks 56 als Regelung einer Zustandsgröße auf einen vom Fahrer vorgegebenen Sollwert. Eine derartige Zustandsgröße ist der Radschlupf.

Der Fahrer gibt durch Betätigen des Bremspedals, was durch die Erfassung des Pedalwegs und/oder der ausgeübten Pedalkraft ermittelt wird, einen Sollwert für den Regelkreis vor. Dieser regelt die einzelnen Radbremsen individuell durch Vergleich des Sollwertes mit dem an den jeweiligen Radbremsen gemessenen Istwerten durch Betätigen der elektromotorischen Zuspannung der Radbremsen ein. Sonderfunktionen wie ABS, ASR und/oder FDR greifen ebenfalls radindividuell auf die jeweilige Radbremse ein. Dabei wird im bevorzugten Ausführungsbeispiel eine Veränderung des vom Fahrer vorgegebenen radindividuellen Sollwertes vorgenommen. Aus den ermittelten Bremskräften an den Radbremsen werden im Funktionsblock 62 die relativen Radaufstandskräfte ermittelt. Durch Plausibilitätsprüfung der ermittelten Werte einzeln und zueinander wird auf Unstimmigkeiten im Bereich einzelner Radbremsen geschlossen. Die entsprechenden Informationen (Radaufstandkräfte bzw. Unstimmigkeiten) werden sowohl dem Funktionsblock 58 als auch dem Funktionsblock 56 zur Verfügung gestellt, welcher bei der Berechnung der einzustellenden Werte für die Radbremsen die Radlasten berücksichtigt bzw. bei Unstimmigkeiten Notlaufmaßnahmen ergreift.

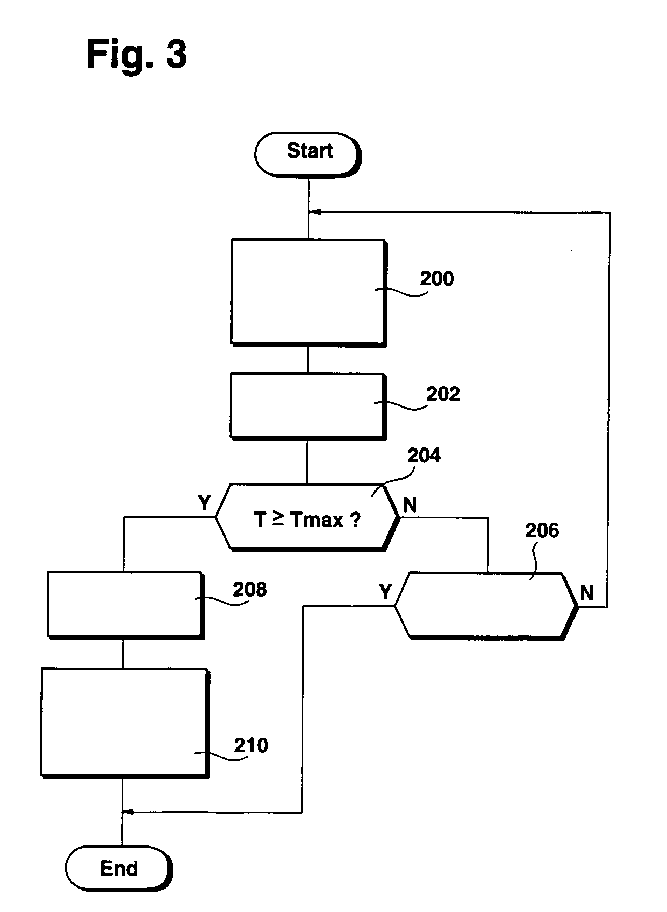

Figur 2 zeigt ein Blockschaltbild der oben beschriebenen Regelung. Aus dem über die Leitung 40 zugeführten Fahrerwunsch wird im Rahmen einer Tabelle oder Kennlinie 100 der vom Fahrer vorgegebene Sollwert SOLLF bestimmt. Im bevorzugten Ausführungsbeispiel erfolgt eine Regelung auf vorgegebene Radschlupfsollwerte. Dies bedeutet, daß die Kennlinie bzw. Tabelle 100 das Betätigungsausmaß des Bremspedals (Weg- und/oder Kraftsignal) in einen Radschlupfsollwert umsetzt. Der vom Fahrer vorgegebene Sollwert wird in einem Sollwertbildner 102 in Schlupfsollwerte für die einzelnen Radbremsen verteilt. Dabei werden die über die Leitungen 60 und 64 zugeführten Informationen bezüglich Unstimmigkeiten, relativen Radlasten und Zusatzfunktionen berücksichtigt. Beispielsweise wird bei einem Eingriff des Fahrdynamikreglers der Sollwert an den ausgewählten Radbremsen im Sinne der Fahrdynamikregelung verändert. Der radindividuelle Sollwert wird über die Leitungen 104, 106, 108 bzw. 110 abgegeben. Am Beispiel einer Radbremse ist gezeigt, daß die Leitung 108 auf einem Differenzierer 112 geführt wird, in dem der vorgegebene Sollwert mit dem über eine Leitung 114 zugeführten Istwert für den Radschlupf verglichen wird. Dieser Istwert kann durch entsprechende Meßeinrichtungen erfaßt oder auf der Basis der Radgeschwindigkeiten und der Fahrzeuggeschwindigkeit berechnet werden. Die Differenz zwischen Soll- und Istwert wird über die Leitung 116 auf den Regler 118 geführt, dessen Ausgangsleitung 120 zum Bremsensteller 28 führt. Der Regler 118 bestimmt im Rahmen einer vorgegebenen Regelstrategie (z. B. PID) ein Ausgangssignal, welches zu einer Annäherung des Istwertes an den Sollwert führt. Die an der Bremse ausgeübte Bremskraft stellt sich dann entsprechend dem Ausgangssignal des Reglers ein.

Die in Figur 2 dargestellte Regelung regelt die Bremskräfte an den Rädern so, daß an allen Rädern der gleiche, vom Fahrer vorgegebene Schlupf entsteht. In einer vereinfachten Ausführungsform werden die Räder einer Achse mit gleicher Bremskraft beaufschlagt, da davon ausgegangen werden kann, daß die Radaufstandskräfte an einer Achse gleich sind.

Bei gleichem Schlupf an allen Rädern stellen sich zumindest nach einer gewissen Bremszeit bei gleichem Kraftschlußbeiwert Bremskräfte ein, die proportional zu den Radaufstandskräften an den jeweiligen Rädern sind. Durch Erfassung der Bremsbetätigungskraft werden unter Berücksichtigung der Auslegung der Bremse einschließlich dem Reibkoeffizienten der Bremsbeläge die relativen Aufstandskräfte, d. h. die Verhältnisse der Radkräfte untereinander, abgeschätzt. Dies erfolgt durch statistische Mittelung, da der Kraftschlußbeiwert zwischen Reifen und Fahrbahn schwankt.

Besonders vorteilhaft ist, die Aufstandskräfte nach Fahrtbeginn zu ermitteln, weil sich dann der Beladungszustand des Fahrzeugs nicht mehr ändert.

Die Kenntnis der relativen Radaufstandskräfte dienen zur Abschätzung der Schwerpunktslage des Fahrzeugs. Dies ist besonders wichtig für frontgetriebene Fahrzeuge mit hoher Zuladefähigkeit im Heck.

Wesentlich ist also, daß die Bestimmung der Radaufstandskräfte während einer Regelphase erfolgen, in der die sich einstellenden Bremskräfte proportional zu den relativen Radaufstandskräften sind. Dies ist der Fall, wenn an allen Radbremsen der gleiche Kraftschlußbeiwert auftritt. Eine Regelung auf gleichen Schlupf gewährleistet diese Betriebssituation. In einem vorteilhaften Ausführungsbeispiel sind diese Regelung nur in vorgegebenen Betriebszuständen zur Ermittlung der Radaufstandskraft aktiv, während ansonsten andere Regelungen (z.B. Verzögerungsregelung, Druckregelung, Bremskraftregelung, etc.) aktiv sind. Ist die Ermittlung des Kraftschlußbeiwerts möglich, kann eine solche Betriebsituation (gleicher Kraftschlußbeiwert an allen Rädern) erkannt und die Radaufstandskräfte ermittelt werden.

In Figur 3 ist anhand eines Flußdiagramms die Realisierung der Bestimmung der relativen Radaufstandskräfte als Rechnerprogramm dargestellt.

Nach Start des Programmteils, der beispielsweise bei Betätigen des Fahrpedals (Schließen des Bremspedalschalters) eingeleitet wird, wird im ersten Schritt 200 die an den Rädern des Fahrzeugs gemessenen Bremskräfte Bi eingelesen. Daraufhin wird im Schritt 202 jeweils eine Mittelwertbildung der erfaßten Radbremskräfte durchgeführt. Im darauffolgenden Abfrageschritt 204 wird überprüft, ob ein mitlaufender Zähler seinen Maximalwert erreicht bzw. überschritten hat. Ist dies nicht der Fall, wird im Schritt 206 überprüft, ob der Bremsvorgang beendet wurde. Ist der Bremsvorgang zwischenzeitlich beendet, wird der Programmteil beendet und beim nächsten Bremsvorgang erneut gestartet. Ist der Bremsvorgang nicht beendet, wird mit Schritt 200 der Programmteil wiederholt.

Wurde im Schritt 204 erkannt, daß der Zähler seinen Maximalwert erreicht bzw. überschritten hat, so kann davon ausgegangen werden, daß für die Erfassung der ermittelten Bremskräfte genügend Zeit verstrichen ist und an allen Rädern gleicher Kraftschlußbeiwert vorliegt. Entsprechend wird die Bestimmung der relativen Radaufstandskräfte eingeleitet. Zunächst wird im Schritt 208 der Quotient zwischen jeweils zwei Radbremskräften Bi/Bj gebildet. Dabei werden vorzugsweise die Bremskräfte verschiedener Achsen gegenüberliegender Fahrzeugseiten herangezogen. Dies bedeutet, daß ein Quotient aus der Bremskraft am linken Vorderrad und dem rechten Hinterrad und ein Quotient aus dem rechten Vorderrad und dem linken Hinterrad gebildet wird. In anderen vorteilhaften Ausführungsbeispielen können die Bremskräfte der gleichen Fahrzeugseite herangezogen werden. Nach Bildung der Quotienten werden im Schritt 210 die relativen Aufstandskräfte Ni/Nj ermittelt. Diese ergeben sich unter Berücksichtigung der Bremsenauslegung, des Reibwertes der Bremsbeläge sowie der Reibradien (zusammengefaßt in der Konstante K) proportional zu den relativen Bremskräften. Im Schritt 210 werden die relative Radaufstandskraft zwischen Vorder- und Hinterachse des zweiachsigen Fahrzeuges bestimmt. Nach Bestimmung der relativen Radaufstandskräfte wird der Programmteil beendet.

Eine Abschätzung der absoluten Radaufstandskraft kann aus den relativen Kräften im Rahmen gewisser Toleranzen bei Kenntnis der aktuellen Fahrzeugmasse erfolgen.

In einer vorteilhaften Ausführungsform wird das Ergebnis bei der Berechnung der relativen Aufstandskräfte dadurch überprüft, daß die beiden auf der Basis unterschiedlicher Bremskraftwerte ermittelten Aufstandskräfte miteinander verglichen werden. Bei Abweichungen innerhalb einer Toleranz wird von einer korrekten Messung ausgegangen, während das Ergebnis bei einer Abweichung außerhalb der Toleranz verworfen wird.

Die ermittelten Werte für die relativen Radaufstandskräfte werden in einem vorteilhaften Ausführungsbeispiel bei elektromotorisch betätigten Bremsen herangezogen, um Veränderungen in den Bremsen im Laufe des Fahrzeugbetriebs zu erkennen. Zu diesem Zweck wird laufend die Plausibilität der erfaßten Werte für die einzelnen Räder überprüft.

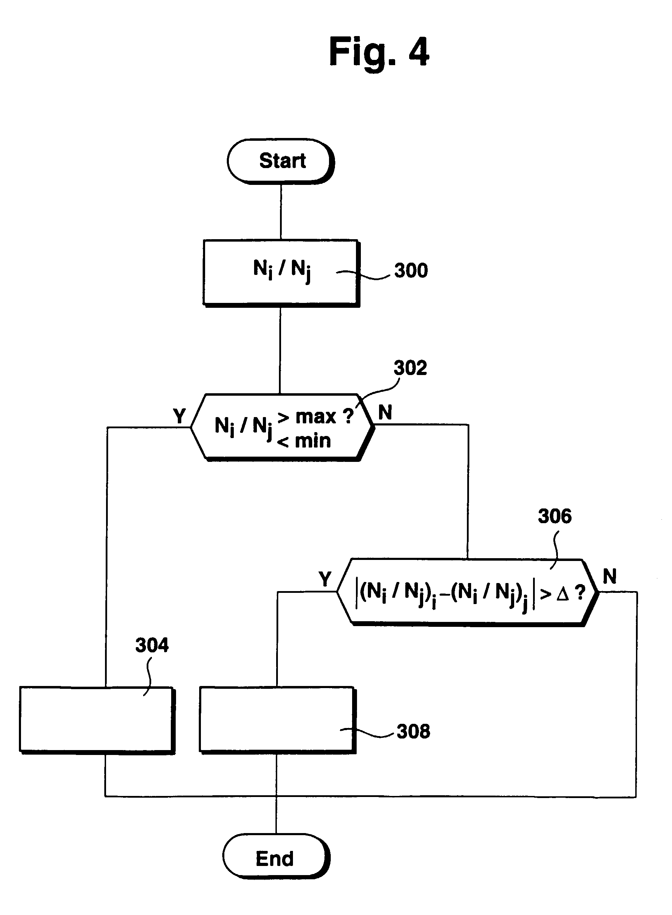

Ein Beispiel für diese Ausgestaltung ist im Flußdiagramm nach Figur 4 dargestellt. Nach Start des Programmteils im Anschluß an eine Bestimmung der relativen Radaufstandskräfte werden die ermittelten Werte im ersten Schritt 300 eingelesen. Daraufhin werden im Schritt 302 die ermittelten Werte mit physikalisch sinnvollen Maximal- bzw. Minimalwerten verglichen. Über- bzw. unterschreiten die ermittelten Relativwerte die Grenzwerte, so wird gemäß Schritt 304 eine Veränderung an den Bremsen festgestellt. Entsprechend wird von einem möglichen Fehlerzustand im Bereich der dieser Berechnung zugrundeliegenden Bremsen ausgegangen. Nach Schritt 304 wird der Programmteil beendet. Liegen die erfaßten Werte für die relativen Radaufstandskräfte im Toleranzbereich, wird gemäß Schritt 306 der Betrag der Differenz der erfaßten relativen Werte auf einen vorgegebenen Toleranzbereich Δ verglichen. Ist der Betrag der Differenz größer als der Toleranzwert Δ, wird gemäß Schritt 308 von einer Unstimmigkeit ausgegangen und ein Fehler im Bereich der Bremsanlage angenommen.

In einem bevorzugten Ausführungsbeispiel werden auch die relativen Radaufstandskräfte anhand der Bremskräfte der Radbremsen einer Achse ermittelt. Diese Werte dienen dann im Rahmen des Schrittes 308 zur Lokalisierung des möglichen Fehlers. Ergeben sich Abweichungen zwischen den relativen Radaufstandskräften beider Achsen, so können anhand der relativen Radaufstandskräfte einer Achse die möglicherweise fehlerbehafteten Radbremsen ermittelt und abgeschaltet werden.

Nach Schritt 308 bzw. bei einer "Nein-Antwort" im Schritt 306 wird der Programmteil beendet und zu gegebener Zeit wiederholt.

## Patentansprüche

1. Verfahren zur Steuerung der Bremsanlage eines Fahrzeugs, wobei die Radbremsen (24) abhängig von einem Sollwert (Soll) betätigt werden, die an den einzelnen Radbremsen (24) ausgeübten Bremskräfte bzw. -momente (Bi) ermittelt und auf der Basis der ermittelten Bremskräfte bzw. -momente (Bi) Radaufstandskräfte (Ni/Nj) abgeschätzt werden,
dadurch gekennzeichnet, daß die Sollwerte (Soll) für die einzelnen Radbremsen (24) Sollschlupfwerte sind, und in vorgegebenen Betriebszuständen eine Regelung der Istschlupfwerte der einzelnen Räder auf den vorgegebenen Sollschlupf vorgesehen ist, wobei nach einer Verzögerungszeit, nach der sich durch die Schlupfregelung an den Rädern (26) des Fahrzeugs im wesentlichen ein gleicher Kraftschluß eingestellt hat, die Bremskräfte bzw. Bremsmomente an wenigstens zwei Rädern ermittelt werden und die relativen Radaufstandskräfte zwischen diesen Rädern aus dem Zusammenhang aus den Radaufstandskräften und der ausgeübten Bremskräften bzw. Bremsmomenten berechnet werden.

2. Verfahren nach Anspruch 1, dadurch gekennzeichnet, daß die Bremsanlage eine Bremsanlage mit elektromotorischer Zuspannung ist.

3. Verfahren nach einem der vorhergehenden Ansprüche, dadurch gekennzeichnet, daß der Zusammenhang zwischen ausgeübter Bremskraft bzw. ausgeübtem Bremsmoment (Bi) und den Radaufstandskräften (Ni) durch eine Proportionalitätskonstante (K) beschrieben wird.

4. Verfahren nach Anspruch 3, dadurch gekennzeichnet, daß als Proportionalitätskonstante (K) die Reibwerte der Bremsbeläge sowie deren Reibradien und die Bremsenauslegung herangezogen wird.

5. Verfahren nach einem der vorhergehenden Ansprüche, dadurch gekennzeichnet, daß die relativen Radaufstandskräfte (Ni/Nj) auf der Basis zweier der Bremskräfte (Bi/Bj) zweier Radbremsen verschiedener Achsen ermittelt werden.

6. Verfahren nach einem der vorhergehenden Ansprüche, dadurch gekennzeichnet, daß durch Plausibilitätsüberprüfung der ermitteltem relativen Radaufstandskräfte (Ni/Nj) Veränderungen an den Radbremsen erkannt werden.

7. Verfahren nach einem der vorhergehenden Ansprüche, dadurch gekennzeichnet, daß zur Ermittlung der relativen Radaufstandskräfte (Ni/Nj) Mittelwerte der erfaßten Bremskräfte (Bi) herangezogen werden.

8. Verfahren nach einem der vorhergehenden Ansprüche, dadurch gekennzeichnet, daß die ermittelten relativen Radaufstandskräfte (Ni/Nj) für Funktionen wie Antiblockierregler, Antriebsschlupfregler, Fahrdynamikregler oder Fahrwerksregler angewendet werden.

9. Vorrichtung zur Steuerung der Bremsanlage eines Fahrzeugs, mit einer elektronischen Steuereinheit (10), welche die Radbremsen (24) abhängig von einem Sollwert (Soll) betätigt und die die an den einzelnen Radbremsen (24) ausgeübten Bremskräfte bzw. -momente (Bi) ermittelt, die Mittel (62) umfaßt, die auf der Basis der ermittelten Bremskräfte bzw. - momente (Bi) Radaufstandskräfte (Ni/Nj) abschätzen,
gekennzeichnet durch
einen Sollwertbilder (100), der für die einzelnen Räder Sollschlupfwerte (SOLL) bildet,
einen Schlupfregler (118), dem die Schlupfsollwerte (Soll) und die Schlupfistwerte zugeführt sind und der in vorgegebenen Betriebszuständen eine Regelung des Istschlupfs der einzelnen Räder auf den vorgegebenen Sollschlupf vornimmt,
Mittel (204, 208, 210), die nach eine Verzögerungszeit, nach der sich durch die Schlupfregelung an den Rädern (26) des Fahrzeugs im wesentlichen ein gleicher Kraftschluß eingestellt hat, die Bremskräfte bzw. Bremsmomente an wenigstens zwei Rädern ermitteln und die relativen Radaufstandskräfte zwischen diesen Rädern aus dem Zusammenhang aus den Radaufstandskräften und der ausgeübten Bremskräften bzw. Bremsmomenten berechnen.

## Claims

1. Method for controlling the brake system of a vehicle, the wheel brakes (24) being activated as a function of a setpoint value (Setp) which system determines the braking forces or moments (Bi) exerted at the individual wheel brakes (24), and tyre contact forces (Ni/Nj) being estimated on the basis of the braking forces or moments (Bi) which are determined, characterized in that the setpoint values (Setp) for the individual wheel brakes (24) are setpoint slip values, and there is provision for the actual slip values of the individual wheels to be adjusted to the predefined setpoint slip in predefined operating states, in which case, after a delay time, after which an essentially identical degree of frictional locking has been established as a result of the slip adjustment at the wheels (26) of the vehicle, the braking forces or braking moments are determined at at least two wheels and the relative tyre contact forces between these wheels are calculated from the relationship between the tyre contact forces and the exerted braking forces or braking moments.

2. Method according to Claim 1, characterized in that the brake system is a brake system with electromotive application of the brakes.

3. Method according to one of the preceding claims, characterized in that the relationship between the exerted braking force or exerted braking moment (Bi) and the tyre contact forces (Ni) is described by means of a proportionality constant (K).

4. Method according to Claim 3, characterized in that the frictional values of the brake linings, their friction radii and the configuration of the brakes are used as the proportionality constant (K).

5. Method according to one of the preceding claims, characterized in that the relative tyre contact forces (Ni/Nj) are determined on the basis of two of the braking forces (Bi/Bj) of two wheel brakes on different axles.

6. Method according to one of the preceding claims, characterized in that changes at the wheel brakes are detected by means of plausibility checking of the relative tyre contact forces (Ni/Nj) which are determined.

7. Method according to one of the preceding claims, characterized in that mean values of the braking forces (Bi) which are detected are used to determine the relative tyre contact forces (Ni/Nj).

8. Method according to one of the preceding claims, characterized in that the relative tyre contact forces (Ni/Nj) which are determined are applied for functions such as anti-lock brake controllers, traction controllers, vehicle dynamics controllers or ride control systems.

9. Device for controlling the brake system of a vehicle, having an electronic control unit (10) which activates the wheel brakes (24) as a function of a setpoint value (Setp) and which determines the braking forces or moments (Bi) exerted at the individual wheel brakes (24) and which comprises means (62) which estimate tyre contact forces (Ni/Nj) on the basis of the braking forces or moments (Bi) which are determined, characterized by a setpoint value former (100) which forms setpoint slip values (SETP) for the individual wheels,
a traction controller (118) to which the slip setpoint values (Setp) and the slip actual values are fed and which adjusts the actual slip of the individual wheels to the predefined setpoint slip in predefined operating states,
means (204, 208, 210) which, after a delay time, after which an essentially identical degree of frictional locking has become established as a result of the traction control at the wheels (26) of the vehicle, determine the braking forces or braking moments at at least two wheels and calculate the relative tyre contact forces between these wheels from the relationship between the tyre contact forces and the braking forces or braking moments which are exerted.

## Revendications

1. Procédé de commande d'une installation de freinage d'un véhicule selon lequel on actionne les freins de roue (24) en fonction d'une valeur de consigne (Cons), on détermine les forces ou couples de frein (Bi) exercés au niveau des différents freins de roue (24) et sur la base des couples ou forces de frein (Bi) ainsi déterminés, on évalue les forces d'appui de roue (Ni/Nj),
caractérisé en ce que
les valeurs de consigne (Cons) des différents freins de roue (24) sont des valeurs de patinage de consigne et dans des états de fonctionnement prédéterminés, on effectue une régulation des valeurs de patinage réelles des différentes roues selon un patinage de consigne prédéterminé, et après une durée de temporisation après laquelle la régulation de patinage au niveau des roues (26) du véhicule a établi essentiellement le même accrochage, on détermine les forces de frein ou les couples de freinage au niveau d'au moins deux roues et on calcule les forces d'appui de roue relatives entre ces roues à partir de la relation entre les forces d'appui de roue et les forces ou couples de frein exercées.

2. Procédé selon la revendication 1,
caractérisé en ce que
l'installation de freinage est une installation à serrage de frein par moteur électrique.

3. Procédé selon l'une des revendications précédentes,
caractérisé en ce que
la relation entre la force ou le couple de frein (Bi) exercée et les forces d'appui de roue (Ni) se décrit par une constante de proportionnalité (K).

4. Procédé selon la revendication 3,
caractérisé en ce que
la constante de proportionnalité (K) utilise les coefficients de frottement des garnitures de frein ainsi que les rayons de frottement et la conception des freins.

5. Procédé selon l'une quelconque des revendications précédentes,
caractérisé en ce que
les forces d'appui de roue, relatives (Ni/Nj) se déterminent sur la base de deux forces de frein (Bi/Bj) de deux freins de roue appartenant à des essieux différents.

6. Procédé selon l'une quelconque des revendications précédentes,
caractérisé en ce qu'
on détecte les variations des freins de roue par un contrôle de plausibilité des forces d'appui relatives de roue (Ni/Nj) obtenues.

7. Procédé selon l'une quelconque des revendications précédentes,
caractérisé en ce qu'
on utilise les valeurs moyennes des forces de frein de roue (Bi) pour déterminer les forces d'appui relatives de roue (Ni/Nj).

8. Procédé selon l'une quelconque des revendications précédentes,
caractérisé en ce qu'
on applique les forces relatives d'appui de roue (Ni/Nj), déterminées, pour des fonctions telles que la régulation antiblocage, la régulation antipatinage, la régulation de la dynamique de roulement et la régulation de suspension.

9. Dispositif de commande de l'installation de frein d'un véhicule comprenant :
- une unité de commande électronique (10) actionnant les freins de roue (24) en fonction d'une valeur de consigne (Cons) et déterminant les forces ou couples de frein (Bi) exercées au niveau des différents freins de roue (24) et
- des moyens (62) évaluant les forces d'appui de roue (Ni/Nj) sur la base des forces ou couples de frein (Bi), obtenues,
caractérisé par
- un générateur de valeurs de consigne (100) qui forme les valeurs de patinage de consigne (CONS) pour les différentes roues,
- un générateur de patinage (118) qui reçoit les valeurs de consigne de patinage (Cons) et les valeurs réelles de patinage et qui dans des états de fonctionnement prédéterminés, effectue une régulation du patinage réel des différentes roues sur la valeur de consigne prédéterminée,
- les moyens (204, 208, 210) qui après une durée de temporisation à la fin de laquelle la régulation de patinage des roues (26) du véhicule a réglé essentiellement un même accrochage, déterminent les forces ou couples de frein sur au moins deux roues et calculent les forces d'appui relatives des roues entre ces roues à partir de la relation entre les forces d'appui de roue et les forces ou couples de frein exercées.
